# DEMANDE DE BREVET EUROPEEN

(11) **EP 1 317 049 A1**
(43) Date de publication de la demande: **04.06.2003**
(21) Numéro de dépôt: 02292902.0
(22) Date de dépôt: 22.11.2002
(51) Int. Cl.: H02K 7/12, F02N 11/02

(54) **Moteur à rotor décalé pour un démarreur véhicule automobile**

(30) Priorité: 30.11.2001 FR 0115512
(71) Demandeur: VALEO EQUIPEMENTS ELECTRIQUES MOTEUR, 94017 Creteil Cedex (FR)
(72) Inventeur: Vilou, Gérard, 69160 Tassin La Demi Lune (FR)
(74) Mandataire: Gamonal, Didier

(57) **Abrégé**

Moteur à rotor décalé pour un démarreur de véhicule automobile, comprenant un rotor (14) sans collecteur du type à réluctance variable ou à cage d'écureuil, et un pignon (12) monté sur l'arbre de transmission (22) au moyen d'une liaison mécanique en rotation autorisant de plus un mouvement relatif de translation axiale du pignon (12) par rapport à l'arbre (22) entre la position de repos et la position de travail. Le déplacement axial du pignon (12) est compris entre 0,2 et 1,5 fois la largeur de la denture de la couronne (36). La liaison mécanique comporte une série de cannelures (28) solidaires de l'arbre de transmission (22), et agencées pour laisser au pignon (12) une liberté en translation tout en le liant en rotation à l'arbre (22).

## Description

### Domaine technique de l'invention

L'invention concerne un moteur à rotor décalé pour un démarreur de véhicule automobile, comprenant :
- un stator équipé de bobines inductrices destinées à engendrer un champ magnétique inducteur,
- un arbre de transmission supportant le rotor, lequel est déplaçable axialement depuis une position décalée de repos vers une position centrée de travail sous l'effet de l'attraction magnétique exercée par le stator sur le rotor,
- un pignon destiné à s'engrener dans la position active de travail avec une couronne dentée de démarrage,
- des moyens de rappel du rotor vers la position décalée de repos après interruption de l'alimentation,
- et des moyens de réglage du courant d'alimentation du moteur à partir de la batterie du véhicule.

### État de la technique

Un démarreur de véhicule automobile comporte d'une manière classique un moteur électrique rotatif dont l'arbre de sortie est équipé d'un pignon mobile destiné à coopérer avec une couronne dentée de démarrage pour assurer le démarrage du moteur à combustion du véhicule. Le pignon est généralement monté à coulissement sur l'arbre du moteur électrique entre une position de repos dans laquelle il est désengagé de la couronne dentée, et une position active de travail dans laquelle il engrène avec ladite couronne liée en rotation au vilebrequin du moteur à combustion du véhicule. Le moteur électrique du démarreur est associé à un contacteur à électro-aimant disposé au-dessus du moteur, et ayant une double fonction d'alimentation du moteur électrique en courant, et de déplacement du pignon mobile entre les deux positions de repos et de travail. Un tel démarreur est décrit par exemple dans le document FR A 2 795 884 auquel on se reportera pour plus de précisions.

Le noyau mobile du contacteur est relié mécaniquement par un levier à un lanceur à roue libre et moyeu auquel appartient le pignon. Le levier en forme de fourchette est monté à pivotement, et la roue libre est intercalée axialement entre le pignon et le moyeu, lequel est pourvu intérieurement de cannelures hélicoïdales en prise avec des dentures complémentaires portées par l'arbre de sortie du moteur électrique. L'ensemble lanceur et pignon est ainsi animé d'un mouvement hélicoïdal lors du déplacement du levier pour venir en prise avec la couronne dentée. L'excitation du contacteur est pilotée par l'actionnement de la clé de contact, qui ferme le circuit électrique vers la batterie.

Une autre manière connue pour déplacer le pignon vers la couronne dentée consiste à décaler axialement le rotor (induit) par rapport au stator (inducteur). Dans ce cas, le contacteur décrit précédemment n'est plus nécessaire. Lors de l'alimentation du moteur, il se produit, en plus du mouvement de rotation, une force d'attraction magnétique s'exerçant dans la direction axiale pour recentrer l'induit sous l'inducteur. Le lanceur est solidarisé à l'arbre de transmission du rotor, et la course de translation doit être suffisante pour autoriser l'engagement du pignon sur la couronne dentée.

Le document EP-A-0922854 décrit un perfectionnement de ce dernier type de démarreur, dans lequel l'induit décalé est tronconique, et coopère avec un stator de forme complémentaire, de manière à développer une force d'attraction non nulle en fin de course de centrage de l'induit dans l'inducteur. Le bobinage de l'induit est alimenté par un collecteur, et est relié électriquement en série avec l'inducteur. L'intensité d'alimentation du moteur est contrôlée par un composant semi-conducteur de puissance, par exemple un transistor de puissance MOSFET, piloté par un circuit de commande en liaison avec la clé de contact, et un capteur de position. La variation du courant permet d'alimenter le moteur avec une intensité modérée pendant la course de déplacement axial du pignon vers la position de travail, puis avec une intensité plus importante après la phase d'engrenage. Le contrôle du courant n'est pas toujours maîtrisable en fonction de certains paramètres influant sur le couple résistant (température, viscosité du lubrifiant, etc..). Le pignon est solidaire mécaniquement de l'arbre de transmission, et lorsqu'il arrive en dent contre dent contre la couronne dentée, le rotor est actionné en rotation ou est déjà soumis à un mouvement de rotation lente. Lorsqu'une dent du pignon arrive en regard d'un entre dent de la couronne, le pignon poursuit sa pénétration axiale sous l'effet de la poussée du rotor par les forces magnétiques. Durant cette course de pénétration, le pignon continue de tourner jusqu'à la venue du flanc menant du pignon contre le flanc mené de la couronne. Il en résulte des chocs mécaniques entre les deux flancs, avec des risques d'usure prématurée du pignon et de la couronne. L'usure est d'autant plus prononcée que le rotor possède une vitesse et une inertie de rotation élevées. La profondeur de pénétration du pignon dans la couronne au moment du choc est d'autant plus faible que la force d'attraction magnétique est faible, et que la masse du rotor est grande.

Selon le document FR-A-2791830, une comparaison du courant d'alimentation du moteur électrique avec une valeur de seuil, est opérée aussi longtemps que le pignon n'a pas atteint la position de travail. L'excitation du moteur est réduite en cas de dépassement du seuil.

Les inconvénients des démarreurs connus à rotor décalé sont les suivants :
- Le pignon avance en direction de la couronne sous l'effet du recentrage magnétique axial, et est sollicité simultanément en rotation. L'accélération du pignon est particulièrement élevée dans le cas d'un moteur série à courant continu et à inducteur bobiné. Si le courant n'est pas contrôlé correctement, le pignon peut arriver contre la couronne avec une vitesse de rotation élevée, entraînant des risques de chocs et de non pénétration. Il en résulte des bruits relativement importants, et une usure prématurée du pignon et de la couronne par arrachement de métal ou destruction de la denture.
- Un moteur série à rotor décalé nécessite un collecteur dont la longueur est égale à au moins la longueur du balai augmentée de la course du pignon entre les positions de repos et de travail. La fabrication d'un tel collecteur entraîne une augmentation de l'encombrement axial du démarreur, ce qui engendre un coût trop élevé.
- Les chocs mécaniques répétés à chaque démarrage sur de faibles longueurs en prises de denture provoquent à la longue une usure du bout des dents qui peut interdire la pénétration du pignon dans la couronne. Le pignon en tournant, frotte contre le chant de la couronne, ce qui accélère sa destruction.

### Objet de l'invention

L'invention a pour but de pallier ces inconvénients, et de réaliser un démarreur sans dispositif de roue libre, et à rotor décalé facilitant la pénétration du pignon sur la couronne dentée à entraîner.

Selon l'invention, ce but est atteint par le fait que le rotor sans collecteur est du type à réluctance variable ou à cage d'écureuil, et en ce que le pignon est monté sur l'arbre de transmission au moyen d'une liaison mécanique en rotation autorisant de plus un mouvement relatif de translation axiale du pignon par rapport à l'arbre entre la position de repos et la position de travail.

Un tel moteur à rotor décalé et à commutation électronique permet de supprimer le contacteur de puissance à levier d'actionnement, et le dispositif de roue libre, et d'utiliser un rotor sans collecteur de manière à réduire l'encombrement, le coût et le poids du démarreur.

Selon un mode de réalisation préférentiel, le déplacement axial du pignon est compris entre 0,2 et 1,5 fois la largeur de la denture de la couronne de démarrage. La liaison mécanique comporte une série de cannelures solidaires de l'arbre de transmission, et agencées pour laisser au pignon une liberté en translation tout en le liant en rotation à l'arbre. Les cannelures présentent une inclinaison comprise entre 0 et 50° par rapport à la direction axiale de l'arbre, et une orientation inverse par rapport au sens de rotation du rotor. Un deuxième élément élastique prend appui sur une partie fixe de l'arbre ou du rotor pour solliciter axialement le pignon contre une butée solidaire de l'arbre.

Pour obtenir une pénétration sans usure du pignon dans la couronne de démarrage, le dispositif peut avantageusement être complété par une ou plusieurs des caractéristiques suivantes :
- la butée est située avant l'extrémité de l'arbre du côté de la couronne dentée, et est formée par un anneau du type circlips logé dans une gorge de l'arbre ;
- le deuxième élément élastique est formé par un ressort de compression entourant coaxialement l'arbre de transmission, et susceptible de se comprimer par attraction magnétique du rotor lorsque qu'une dent du pignon se trouve en regard d'une dent de la couronne ;
- le pignon est muni de chanfreins sur la face frontale en regard de la couronne ;
- le commutateur électronique coopère avec des moyens de détection pour scruter la venue en butée du pignon contre la couronne, par exemple au moyen d'un capteur de présence détectant une position axiale prédéterminée, ou d'un capteur d'intensité destiné à analyser la variation du courant dans ladite bobine ;
- l'unité de commande du commutateur délivre aux bobines inductrices les courants nécessaires au déplacement axial du pignon sans rotation du rotor ;
- l'unité de commande du commutateur délivre aux bobines inductrices les courants nécessaires au déplacement axial du pignon ainsi qu'une rotation à vitesse réduite du rotor ;
- des moyens de réglage du commutateur sont ajustés pour alimenter les bobines inductrices de façon à obtenir une puissance progressivement croissante jusqu'à sa valeur maximale ;
- des moyens de réglage du commutateur électronique sont ajustés pour alimenter les bobines inductrices sous pleine puissance après avoir détecté la pénétration du pignon dans la couronne ;
- le commutateur électronique interrompt l'alimentation des bobines inductrices dès que le démarrage est confirmé, entraînant le rappel automatique du rotor vers la position décalée de repos sous l'action d'un premier élément élastique.

### Description sommaire des dessins

D'autres avantages et caractéristiques ressortiront plus clairement de la description qui va suivre de modes particuliers de réalisation de l'invention donnés à titre d'exemples non limitatifs, et représentés aux dessins annexés, dans lesquels :
- la figure 1 est une vue schématique d'un démarreur à rotor décalé conforme à l'invention, le rotor étant représenté en position de repos en absence d'alimentation ;
- la figure 2 montre une vue identique de la figure 1, le rotor étant centré dans le stator avec le pignon se trouvant dans une position intermédiaire dent contre dent avec la couronne ;
- la figure 3 représente une vue identique de la figure 2, le pignon étant en position de travail après engagement sur la couronne.

### Description d'un mode de réalisation préférentiel.

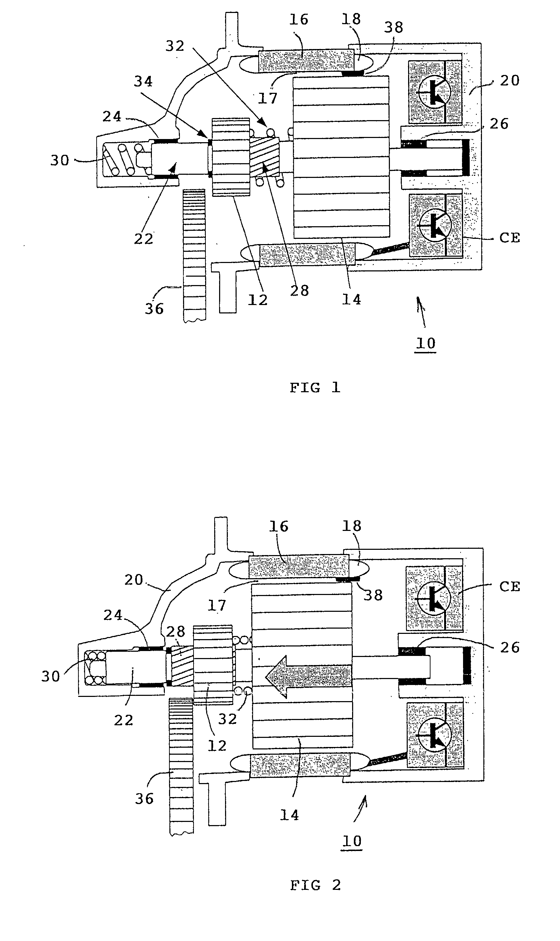

En référence aux figures 1 à 3, le moteur 10 électrique du démarreur est un moteur à commutation électronique, sans collecteur, sans contacteur ou relais auxiliaire, sans dispositif de roue libre, et sans levier d'actionnement du pignon 12. Le moteur 10 possède un rotor 14 à cage d'écureuil ou à réluctance variable, et un stator 16 équipé de bobines inductrices 18. Un carter 20 à deux flasques porte le stator 16 et le rotor 14. Le rotor 14 est séparé du stator 16 par un entrefer 17 radial, et est décalé longitudinalement en position de repos par rapport au stator 16 à l'opposé du pignon 12. Les extrémités opposées de l'arbre de transmission 22 du rotor 14 sont supportées dans deux paliers 24, 26 ménagés dans les flasques du carter 20 du moteur 10. De manière connue, le flasque associé au palier 24 sert à la fixation du démarreur sur une partie fixe du véhicule. Ce flasque présente un dégagement pour pénétration de la couronne dentée de démarrage 36. Cette couronne 36 est, de manière connue, solidaire d'un volant lié en rotation de manière rigide ou circonférentiellement élastique au vilebrequin du moteur à combustion interne du véhicule automobile. Les flasques présentent chacun une cavité (non référencée) pour le montage du palier 24, 26 concerné et pour le logement de l'extrémité concernée de l'arbre 22, ainsi que d'un élément élastique 30 décrit ci-après. Le stator 16 comporte, de manière connue, un corps doté de rainures pour le montage de bobines 18 traversant le corps du stator 16 pour s'étendre de part et d'autre de celui-ci et former des chignons. Le corps du stator est intercalé entre les deux flasques reliés entre eux par exemple à l'aide de vis ou de tirants.

Les bobines inductrices 18 du stator 16 sont excitées séquentiellement par un commutateur électronique CE, lequel est logé à l'intérieur du carter 20 autour du palier 26, ou dans un boîtier auxiliaire. Le commutateur électronique CE est constitué par un onduleur, ou un hacheur, et comprend des cellules de commutation constituées à titre d'exemple par des transistors MOS.

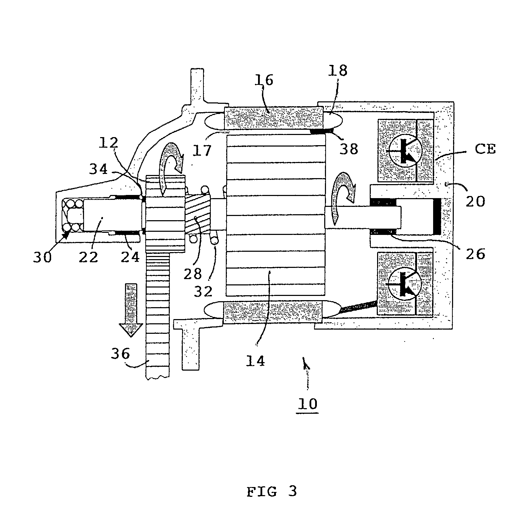

Le pignon 12 est monté sur l'arbre de transmission 22 au moyen d'une liaison mécanique en rotation autorisant de plus un mouvement relatif de translation axiale du pignon 12 par rapport à l'arbre 22 entre la position de repos (figure 1), et la position de travail (figure 3).

A cet effet, l'arbre de transmission 22 est équipé d'une série de cannelures 28 hélicoïdales laissant au pignon 12 une liberté en translation tout en le liant en rotation à l'arbre 22.

Des moyens de rappel comportent un premier élément élastique 30 coopérant avec l'extrémité gauche de l'arbre de transmission 22 pour ramener le rotor 14 vers la position décalée de repos lorsque l'alimentation du moteur 10 électrique est interrompue. Un deuxième élément élastique 32 entoure coaxialement l'arbre de transmission 22 en prenant appui sur une partie fixe de l'arbre 22 ou du rotor 14 pour solliciter axialement le pignon 12 contre une butée 34 solidaire de l'arbre 22. La butée 34 est située avant l'extrémité de l'arbre du côté de la couronne 36 dentée, et est formée à titre d'exemple par un anneau du type circlips logé dans une gorge de l'arbre 22. Le déplacement axial du pignon 12 est compris entre 0,2 et 1,5 fois la largeur de la denture de la couronne 36 dentée de démarrage du véhicule.

Les éléments élastiques 30, 32 sont constitués à titre d'exemples par des ressorts de compression, mais il est clair que d'autres systèmes de rappel peuvent être utilisés, notamment un aimant permanent ou un électroaimant.

Un capteur 38, par exemple du type inductif, à effet Hall, capacitif, ou piézoélectrique, permet de scruter la venue en engagement du pignon 12 contre la couronne 36, et est relié électriquement à l'unité de commande du commutateur électronique CE alimentant les bobines inductrices 18. Le capteur 38 peut être soit un capteur de présence qui signale une position axiale prédéterminée du rotor ou du pignon, soit un capteur d'intensité qui détecte une variation du régime de montée du courant absorbé par le moteur 10.

Le fonctionnement du démarreur selon l'invention est le suivant :
A la figure 1, le démarreur n'est pas alimenté, et le rotor 14 se trouve en position de repos, avec un décentrage axiale par rapport au stator 16 fixe. Le rotor 14 est maintenu dans cette position suite à l'action de rappel du premier élément élastique 30 agissant sur l'extrémité de gauche de l'arbre de transmission 22. Le pignon 12 est maintenu par le deuxième ressort 32 contre la butée 34.
A la figure 2, l'excitation des bobines 18 du stator 16 crée un flux magnétique d'attraction sur le rotor 14, lequel est sollicité dans une position de réluctance minimale, en étant centré sur le stator 16 à l'encontre de la force de rappel du premier ressort 30. Lors de la course d'attraction magnétique, le rotor 14 amène le pignon 12 contre la couronne 36. Si une dent du pignon 12 se trouve à ce moment en face d'une dent de la couronne 36, le pignon 12 est arrêté, mais le rotor 14 peut continuer sa course de translation en comprimant au maximum le deuxième ressort 32, et également le premier ressort 30.
A la figure 3, après un déplacement axial du rotor 14 d'une valeur prédéterminée mesurée par le capteur 38 , le rotor 14 est mis en rotation par l'unité de commande du commutateur électronique CE . L'alimentation du moteur électrique 10 est faite de préférence sous puissance réduite. Le début du mouvement de rotation du rotor 14 amène une dent du pignon 12 en regard d'un entre dent de la couronne 36, ce qui permet une introduction franche du pignon 12 dans la couronne 36 suite à la détente du deuxième ressort 32. La faible inertie mécanique du pignon 12 permet à ce dernier de pénétrer rapidement dans la couronne, de telle manière qu'après rattrapage des jeux et de la transmission du couple de démarrage, la longueur de denture en prise est suffisante pour éviter une usure prématurée des dents du pignon 12 et de la couronne 36.

Les cannelures 28 peuvent être droites ou hélicoïdales avec une inclinaison comprise entre 0 et 50° par rapport à la direction axiale de l'arbre 22. L'orientation est inverse par rapport au sens de rotation du rotor 14. Dans le cas de cannelures hélicoïdales, le couple fourni par le rotor 14 sollicite l'avancement du pignon 12 en direction de la butée 34. Lorsque le pignon 12 arrive contre le flanc mené de la couronne 36, et si le deuxième ressort 32 est encore dans l'état comprimé, le pignon 12 avancera par effet de vissage jusqu'à la butée 34. Durant cette phase, l'effort exercé entre les dentures du pignon et de la couronne 36 est très faible, étant donné qu'il ne sert qu'à vaincre les forces de frottement sur les cannelures. Le pignon 12 devra uniquement vaincre le couple résistant du moteur thermique lors de son engagement contre la butée 34. Mais à ce moment, les dents du pignon 12 sont totalement en prise avec celles de la couronne 36, ce qui nécessite une contrainte réduite. Après un temps prédéterminé, ou après un angle de rotation prédéterminé mesuré à partir du début de rotation du rotor 14, la pleine puissance du moteur électrique 10 est alors délivrée sous l'effet des courants pilotés par l'unité de commande du commutateur CE.

Lorsque l'alimentation du moteur 10 électrique est interrompue, le rotor 14 retourne automatiquement vers la position de repos de la figure 1 sous l'effet de détente du premier ressort de rappel 30.

On notera que le démarreur est simplifié, qu'il est de faible encombrement radial, qu'il est silencieux et que les usures des dents de la couronne 36 et du pignon 12 sont réduites. De plus le poids du démarreur est réduit.

## Revendications

1. Moteur à rotor décalé pour un démarreur de véhicule automobile, comprenant :
- un stator (16) équipé de bobines inductrices (18) destinées à engendrer un champ magnétique inducteur,
- un arbre de transmission (22) supportant le rotor (14), lequel est déplaçable axialement depuis une position décalée de repos vers une position centrée de travail sous l'effet de l'attraction magnétique exercée par le stator (16) sur le rotor (14),
- un pignon (12) destiné à s'engrener dans la position active de travail avec une couronne (36) dentée de démarrage,
- un premier élément élastique (30) de rappel du rotor (14) vers la position décalée de repos après interruption de l'alimentation,
- et un commutateur électronique (CE) d'alimentation des bobines inductrices (18) du moteur (10),
**caractérisé en ce que** le rotor (14) sans collecteur est du type à réluctance variable ou à cage d'écureuil, et **en ce que** le pignon (12) est monté sur l'arbre de transmission (22) au moyen d'une liaison mécanique en rotation autorisant de plus un mouvement relatif de translation axiale du pignon (12) par rapport à l'arbre (22) entre la position de repos et la position de travail.

2. Moteur à rotor décalé selon la revendication 1, **caractérisé en ce que** le déplacement axial du pignon (12) est compris entre 0,2 et 1,5 fois la largeur de la denture de la couronne (36).

3. Moteur à rotor décalé selon la revendication 1 ou 2, **caractérisé en ce que** la liaison mécanique comporte une série de cannelures (28) solidaires de l'arbre de transmission (22), et agencées pour laisser au pignon (12) une liberté en translation tout en le liant en rotation à l'arbre (22).

4. Moteur à rotor décalé selon la revendication 3, **caractérisé en ce que** les cannelures (28) présentent une inclinaison comprise entre 0 et 50° par rapport à la direction axiale de l'arbre (22), et une orientation inverse par rapport au sens de rotation du rotor (14).

5. Moteur à rotor décalé selon la revendication 1, **caractérisé en ce qu'**un deuxième élément élastique (32) prend appui sur une partie fixe de l'arbre (22) ou du rotor (14) pour solliciter axialement le pignon (12) contre une butée (34) solidaire de l'arbre (22).

6. Moteur à rotor décalé selon la revendication 5, **caractérisé en ce que** la butée (34) est située avant l'extrémité de l'arbre (22) du côté de la couronne (36) dentée, et est formée par un anneau du type circlips logé dans une gorge de l'arbre (22).

7. Moteur à rotor décalé selon la revendication 5, **caractérisé en ce que** le deuxième élément élastique (32) est formé par un ressort de compression entourant coaxialement l'arbre de transmission (22), et susceptible de se comprimer par attraction magnétique du rotor (14) lorsque qu'une dent du pignon (12) se trouve en regard d'une dent de la couronne (36).

8. Moteur à rotor décalé selon l'une des revendications 1 à 7, **caractérisé en ce que** le commutateur électronique (CE) est piloté par un capteur (38) pour scruter la venue en butée du pignon (12) contre la couronne (36).

9. Moteur à rotor décalé selon la revendication 8, **caractérisé en ce que** le capteur (38) comporte un détecteur de présence signalant une position axiale prédéterminée du rotor (14) ou du pignon (12).

10. Moteur à rotor décalé selon la revendication 8, **caractérisé en ce que** le capteur (38) est constitué par un capteur d'intensité destiné à analyser la variation du courant dans les bobines inductrices (18).

11. Moteur à rotor décalé selon l'une des revendications 8 à 10, **caractérisé en ce que** l'unité de commande du commutateur (CE) délivre aux bobines inductrices (18) les courants nécessaires au déplacement axial du pignon (12) sans rotation du rotor (14) .

12. Moteur à rotor décalé selon l'une des revendications 8 à 10 , **caractérisé en ce que** l'unité de commande du commutateur (CE) délivre aux bobines inductrices (18) les courants nécessaires au déplacement axial du pignon (12) ainsi qu'une rotation à vitesse réduite du rotor (14).

13. Moteur à rotor décalé selon l'une des revendications 11 à 12, **caractérisé en ce que** des moyens de réglage du commutateur électronique (CE) sont ajustés pour alimenter les bobines inductrices (18) sous pleine puissance après avoir détecté la pénétration du pignon (12) dans la couronne (36).

14. Moteur à rotor décalé selon la revendication 13, **caractérisé en ce que** des moyens de réglage du commutateur (CE) sont ajustés pour alimenter les bobines inductrices (18) de façon à obtenir une puissance progressivement croissante jusqu'à sa valeur maximale .

15. Moteur à rotor décalé selon l'une des revendications 11 à 14, **caractérisé en ce que** le commutateur électronique (CE) interrompt l'alimentation des bobines inductrices (18) dès que le démarrage est confirmé, entraînant le rappel automatique du rotor (14) vers la position décalée de repos sous l'action du premier élément élastique (30).

16. Moteur à rotor décalé selon la revendication 1, **caractérisé en ce que** le pignon (12) est muni de chanfreins sur la face frontale en regard de la couronne (36).
